# EUROPEAN PATENT SPECIFICATION

(11) **EP 4 540 592 B1**
(45) Date of publication and mention of the grant of the patent: **25.11.2026**
(21) Application number: 23758709.2
(22) Date of filing: 13.06.2023
(51) Int. Cl.: G01N 21/03, G02B 21/34, B01L 3/00, G01N 21/64

(54) **PLATE ASSEMBLY FOR RAPID, AUTOMATIC, HIGH PENETRATION DEPTH EXAMINATION OF SAMPLES WITH A LIGHT-SHEET MICROSCOPE, AS WELL AS A METHOD FOR USING SUCH PLATE ASSEMBLY**
PLATTENANORDNUNG ZUR SCHNELLEN, AUTOMATISCHEN, HOCHPENETRATIONSTIEFENUNTERSUCHUNG VON PROBEN MIT EINEM LICHTBLATTMIKROSKOP SOWIE VERFAHREN ZUR VERWENDUNG SOLCH EINER PLATTENANORDNUNG
ENSEMBLE DE PLAQUES POUR EXAMEN RAPIDE, AUTOMATIQUE ET À PROFONDEUR DE PÉNÉTRATION ÉLEVÉE D'ÉCHANTILLONS PAR MICROSCOPE À FEUILLE DE LUMIÈRE, AINSI QUE PROCÉDÉ D'UTILISATION D'UN TEL ENSEMBLE DE PLAQUES

(30) Priority: 14.06.2022 HU 2200213
(43) Date of publication of application: 23.04.2025
(73) Proprietor: Single-cell Technologies Kft., 6726 Szeged (HU); Szegedi Biológiai Kutatóközpont, 6726 Szeged (HU)
(72) Inventor: DIÓSDI, Ákos, 8100 Várpalota (HU); HORVÁTH, Péter, 6726 Szeged (HU)
(74) Representative: Danubia Patent & Law Office LLC
(86) International application number: PCT/HU2023/050033
(87) International publication number: WO 2023/242604

(56) References cited:
- WO-A1-2022/074084
- CN-A- 110 133 837
- DE-A1- 4 016 617
- US-A1- 2016 170 195
- US-A1- 2018 164 569
- US-A1- 2019 353 884

## Description

The subject matter of the invention is a plate assembly for rapid, automatic, high penetration depth examination of samples with a light-sheet microscope, as well as a method for using such a plate assembly.

Currently, the examination of 3-dimensional or 3D cell cultures (e.g., spheroids, organoids, microtissues, aggregates, etc.) and tissue samples is typically carried out with confocal microscopes, however, the use of light-sheet microscopes is increasingly common to ensure high penetration depth, high imaging speed and low phototoxicity. The applicability of these microscopes for the examination of 3-dimensional cell cultures and tissue samples is strongly influenced by the limited number of such sample holder plates that are accommodate a large number of samples and are compatible with the above systems.

The article "Ultra-thin fluorocarbon foils optimise multiscale imaging of three-dimensional native and optically cleared specimens" published by Hötte et. al in 2009, shows the vacuum forming method of a FEP (Fluorinated Ethylene Propylene) foil. During the vacuum forming, cuvettes are formed, which are suitable for receiving 3-dimensional samples for examining the samples with a fluorescent light-sheet microscope. Using the method described in the article, several cuvettes (3x3 cuvettes) are fabricated for each foil, however, for testing samples, these cuvettes are separated from each other and used separately for the examination of the samples. Furthermore, during the examination of the sample, no element is used that would limit the sample chamber of the cuvette in such a way that it can only receive a single sample, and no means are used to prevent the movement of the samples during the examination.

WO2015184360A1 international patent application discloses a sample preparation device and method, during which a 3-dimensional sample is placed in a tube made of FEP foil, and then a tapered elongated member, also made of FEP foil, is placed in the tube, which limits the size of the sample receiving chamber in the tube. However, during the method, the tube is deformed under pressure against the tapered elongated member, which causes mechanical separation of the sample. The purpose of this solution is to homogenize the samples.

WO2015036589 patent application discloses a cuvette for analysis with an inverted fluorescence microscope or an inverted light-sheet fluorescence microscope, wherein the sample is located at the bottom of the cuvette to illuminate the sample from below. Several cuvettes can be formed in a microtiter plate, which can thus be suitable for the simultaneous examination of several samples. The advantage of the invention is that the sample can be positioned at the bottom of the cuvette through the design of the bottom wall of the cuvette, however, the volume of the cuvette is not limited, so it is not only suitable for receiving one sample at a time. In one embodiment of the invention, the solution includes a frame for receiving and stabilizing several cuvettes, however, this frame is only suitable for receiving several separate cuvettes or non-integrated microtiter plates and does not enable the stabilization of an integrated device. Furthermore, the solution according to this invention does not employ a clamping device to prevent movement of the sample in the cuvette.

German patent application DE4016617A1 - regarded as the closest prior art - discloses a holder for automatic sample testing of small volumes of wet or moist (e.g. chemical or biological) preparations, such as e.g. blood. The holder consists of a transparent first plastics plate with surface cavities, wherein a second plate can be placed on said first plate and wherein the holder has a surface configuration forming, with each surface cavity of the first plate, a flat or slightly curved gap of width such that the preparation fills the gap volume and migrates by capillary action. Using said holder, the testing of preparations involves (i) introducing the preparation into the cavities of the first plate; (ii) optionally introducing test reagent into or near the preparation in the cavities or into a corresponding cavity in the second plate; (iii) placing the second plate on the first plate; (iv) cyclically varying the gap volumes by raising and lowering the plates to effect mixing of the preparation optionally with test reagent; and (v) optically examining the mixed preparation through the transparent first and/or second plate. The first plate may consist of an embossed thin plastics sheet and the second plate, preferably, has projections which fit into the embossed cavities. To vary the volumes of the gaps, the first and second plates can be pressed together against spring force.

Various sample holders to be used in optical microscopy are known from US patent application US2016170195A1, international patent application WO2022074084A1, Chinese patent application CN110133837 A and US patent application US2018164569A.

None of the above solutions allows the simultaneous examination of several samples with a light-sheet microscope in such a way that only one sample is placed in each sample holder element, whose position is stabilized.

The aim of the solution according to the invention is to create a plate assembly that is suitable for examining a large number of samples with a light-sheet microscope, wherein a sample is positioned in a specific location in each cuvette in the plate assembly in such a way that neither the sample nor individual parts of the plate assembly can move during the examination. Furthermore, the plate assembly according to the invention can also be used in such a way that, due to the design of the plate assembly, several samples can be continuously examined at the same time, so it is not necessary to reposition and recalibrate a light-sheet microscope.

The aim of the invention is achieved with a plate assembly that is suitable for rapid, automatic examination of samples with a high penetration depth with a light-sheet microscope, said plate assembly comprises:
- a first sample holder for receiving a plurality of samples separated from each other, wherein the first sample holder is a transparent foil sheet and comprises a plurality of cuvettes, wherein each cuvette is configured to receive a sample,
   wherein the plate assembly further comprises

- a sample fixing plate for positioning the samples placed in the cuvettes, wherein the sample fixing plate comprises a plurality of inserts, which can be inserted into the cuvettes of the first sample holder in such a way that per cuvette a chamber is formed between the first sample holder and the inserted sample fixing plate, said chamber ensures the integrity of the structure of a single sample in the cuvettes of the first sample holder, wherein at least one slot is formed next to each insert to allow the transmission of light emitted by the light-sheet microscope, wherein the sample fixing plate also comprises at least two opposite magnets,
- a sample holder frame for receiving the sample holder and the sample fixing plate fitted to each other, said sample holder frame has a planar flat sheet, which comprises at least one receiving element configured to receive the first sample holder and the sample fixing plate inserted therein, wherein the bottom of the receiving element is made of transparent material, and the sample holder frame comprises a planar flat edge extending around the circumference of the sheet, the dimensions of said edge enable a scanning unit of a light-sheet microscope to operate continuously,
wherein the sample holder frame comprises at least two opposite magnets located in the edge, wherein the position of each magnet substantially matches the position of the magnets arranged in the sample fixing plate to connect the magnets to each other and thereby hold the sample fixing plate stable in an inserted position.

Preferably, the plate assembly comprises a second sample holder, which is a transparent foil sheet and comprises a plurality of cuvettes, which can be inserted into the cuvettes of the first sample holder in such a way that per cuvette a chamber is formed between the first sample holder and the second sample holder, said chamber ensures the integrity of the structure of a single sample in the cuvettes of the first sample holder, and wherein each cuvette of the second sample holder is configured to receive each insert of the sample fixing plate.

Preferably, the number of cuvettes of the first sample holder, optionally the number of cuvettes of the second sample holder, and the number of inserts of the sample fixing plate are the same. The sample holder frame may further comprise a circumferentially extending, protruding side wall, wherein each of at least two opposite parts of the side wall comprises at least one L-shaped groove, and the sample fixing plate comprises fixing tabs arranged opposite each other and/or the plate assembly further comprises a grid clamping element, each of which is suitable for inserting into the grooves and can be fixed stably to press down the sample fixing plate in the inserted position, respectively.

Any of the following can be formed individually from a single piece: the first sample holder, optionally the second sample holder, and the sample fixing plate.

The chamber formed in the cuvettes of the first sample holder can be configured to receive a sample and a mounting medium, cell culture medium and/or hydrogel together.

Preferably, the sample holder frame comprises more than one, preferably two, particularly preferably four receiving elements, the dimensions of said receiving elements correspond to the dimensions of a standard slide, wherein each receiving element is arranged next to each other and separated from each other by a partition wall.

Preferably, the thickness of the bottom of the receiving elements is about 150 *µ*m and is made of a material selected from glass, transparent plastic, transparent resin, or transparent FEP (Fluorinated Ethylene Propylene) foil.

Preferably, the first sample holder and the second sample holder are a transparent foil sheet selected from at least one of the following: ECTFE foil (ethylene-chlorotrifluoroethylene), THV foil (tetrafluoroethylene-hexafluoropropylene-vinylidene fluoride), PFA foil (perfluoroalkoxy), PFA-PG foil, PFA-GK foil, PTFE (polytetrafluoroethylene, Teflon) foil, especially FEP foil, wherein the thickness of the foil sheet is between 25-100 *µ*m, preferably between 5-10 *µ*m, and wherein the first sample holder and second sample holder are formed by vacuum forming.

The sample holder frame can be produced by 3-dimensional printing.

The sample holder frame, except for the bottom of the receiving element, can be made of plastic, resin, and/or metal.

The sample can be a 3-dimensional cell culture or tissue sample.

The aim of the invention is further achieved with a method for the use of a plate assembly according to the invention, comprising the steps of:
- in S 10, providing a first sample holder having cuvettes and filling each cuvette with a sample stored in mounting medium, cell culture medium, and/or hydrogel,
- in S20, providing a sample fixing plate having inserts and inserting said inserts into the cuvettes of the first sample holder containing samples, thereby a chamber is formed, which has a volume that ensures the integrity of the structure of a single sample,
- in S30, providing a sample holder frame having receiving element and placing the sample fixing plate inserted into the first sample holder in said receiving element, thereby assembling the plate assembly,
- in S40, connecting magnets of the sample fixing plate and magnets of the sample holder frame to stably fix the plate assembly,
- in S50, inverting the plate assembly in such a way that the cuvettes of the first sample holder element filled with samples face upwards,
- in S60, illuminating the plate assembly from below with a light-sheet microscope for examining the samples.

The aim of the invention is further achieved with a method for the use of a plate assembly according to the invention, comprising the steps of:
- in S 100, providing a first sample holder having cuvettes and filling each cuvette with a sample stored in mounting medium, cell culture medium, and/or hydrogel,
- in S200, providing a second sample holder having cuvettes and inserting said cuvettes into the cuvettes of the first sample holder containing samples, thereby a chamber is formed, which has a volume that ensures the integrity of the structure of a single sample,
- in S300, providing a sample fixing plate having inserts and inserting said inserts into the cuvettes of the second sample holder,
- in S400, providing a sample holder frame having receiving element and placing the first sample holder, the second sample holder, and the sample fixing plate in said receiving element, which are aligned one after the other, thereby assembling the plate assembly,
- in S500, connecting magnets of the sample fixing plate and magnets of the sample holder frame to stably fix the plate assembly,
- in S600, inverting the plate assembly in such a way that the cuvettes of the first sample holder element filled with samples face upwards,
- in S700, illuminating the plate assembly from below with a light-sheet microscope for examining the samples.

Preferably, first filling each cuvette of the first sample holder with a mounting medium, cell culture medium, and/or hydrogel, and then filling with a sample.

Preferably, filling each cuvette of the first sample holder with a sample stored in a mounting medium, cell culture medium, and/or hydrogel, manually or with a pipetting robot.

Preferably, the sample is a 3-dimensional cell culture or tissue sample.

The aim of the invention is further achieved with a method for the use of a plate assembly according to the invention, comprising the steps of:
- in S7, providing a first sample holder having cuvettes and sterilizing it,
- in S8, filling the cuvettes of the sterilized first sample holder with sample-forming material and optionally with cell culture medium,
- in S9, placing the first sample holder in an incubator, wherein the cuvettes of which are filled with sample-forming material and optionally with cell culture medium, until obtaining a sample, then
- sequentially performing steps S20-S60 or S200-S700.

The sample-forming material may comprise single cells in a cell culture medium or hydrogel, or one or more small cell aggregates.

The sample can be a 3-dimensional cell culture of living cells.

Preferably, performing steps S7-S9 in a sterile environment.

Preferably, simultaneously using several receiving elements of the sample holder frame for continuous examination of the samples, without recalibration of the light-sheet microscope.

The method according to the invention may comprise the following step:
- in S41 or S510, before inverting the plate assembly, sliding and stably securing fixing tabs of the sample fixing plate, and/or grid clamping element into the L-shaped grooves formed on side walls of the sample holder frame.

Preferably, producing the first sample holder, and optionally the second sample holder from a FEP (fluorinated ethylene propylene) foil by vacuum forming.

The sample can be a 3-dimensional cell culture of living cells.

Preferably, producing the sample holder frame by 3-dimensional printing.

Hereinafter, the preferred exemplary embodiments of the invention are described with the help of the accompanying drawing. In the drawing:
- Figure 1 is a perspective view of the first sample holder and the sample fixing plate of the plate assembly according to the invention, which are separated from each other,
- Figure 2 shows a preferred embodiment of the sample holder frame of the plate assembly according to the invention in a perspective view,
- Figure 3 shows the plate assembly according to the invention in a perspective view, wherein the first sample holder, sample fixing plate and grid clamping element are connected to each other;
- Figure 4 shows a flow diagram of a method according to the invention for the use of an embodiment of the plate assembly,
- Figure 5 shows a flow diagram of a method according to the invention for the use of a further embodiment of the plate assembly, and
- Figures 6A and 6B show the application of the solution according to the invention with a light-sheet microscope in a side view, with two different embodiments of the plate assembly, respectively.

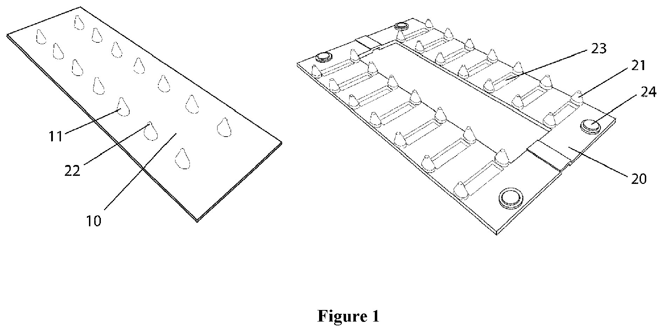

Figure 1 shows a first sample holder 10 and a sample fixing plate 20 of a plate assembly 1 according to the invention in a perspective view, wherein the first sample holder 10 and the sample fixing plate 20 are separated from each other for better visibility of each element. The plate assembly 1 comprises a first sample holder 10, a sample fixing plate 20, and a sample holder frame 30 for rapid, automatic, high penetration depth examination of samples 12 with a light-sheet microscope. The samples 12 are 3-dimensional samples, preferably 3-dimensional cell cultures, optionally 3-dimensional cell cultures with living cells. The samples 12 can also be tissue samples previously removed from a patient or cultured tissue samples.

The first sample holder 10 is a transparent foil sheet with a plurality of cuvettes 11, wherein the cuvettes 11 are configured in such a way that one cuvette 11 is suitable for receiving a single sample 12, which is not shown in this figure. In this case, the sample 12 can be filled into a cuvette 11, not by itself, but stored in a mounting medium, other suitable cell culture medium, and/or hydrogel, for the purpose of examining the sample 12 with a light-sheet microscope. The cuvettes 11 are preferably first filled with mounting medium, cell culture medium, hydrogel or a combination thereof, and then one sample 12 is placed therein. This solution is particularly advantageous in the case of 3-dimensional samples 12 of living cells. The cuvettes 11 can also be filled in such a way that the samples 12 already stored in the mounting medium, cell culture medium, and/or hydrogel are placed together in the cuvettes 11.

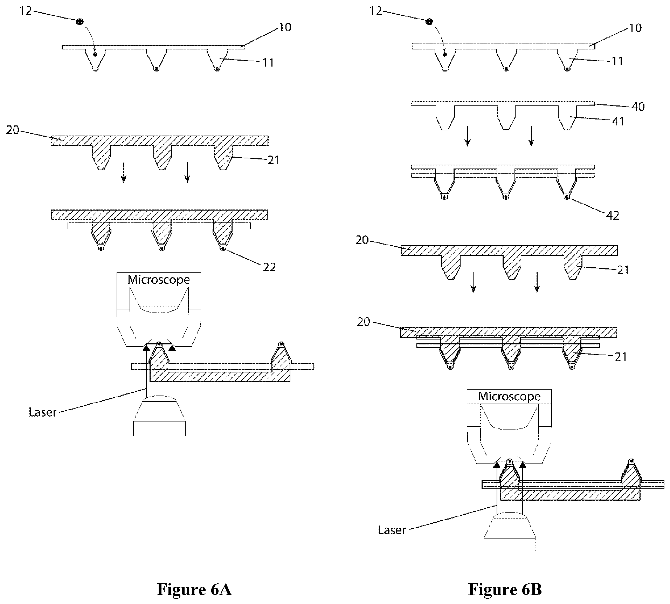

The sample fixing plate 20 comprises a plurality of inserts 21, which can be inserted into the cuvettes 11 of the first sample holder 10. The volume of the cuvettes 11 in itself would be suitable for receiving several samples 12 at the same time, however, in the plate assembly 1 according to the invention, the first sample holder 10 is always connected to the sample fixing plate 20 and is used in this way. When using the plate assembly 1, the inserts 21 of the sample fixing plate 20 are inserted into the cuvettes 11 of the first sample holder 10 in such a way that between the first sample holder 10 and the inserted sample fixing plate 20, a chamber 22 is formed in the cuvettes 11 of the first sample holder 10, wherein for each cuvette 11, the volume of said chamber 22 ensures the integrity of the structure of 12 samples stored in a specific medium. The inserted inserts 21 of the sample fixing plate 20 determine, on the one hand, the volume of the chamber 22, which is suitable for receiving a single sample 12, and, on the other hand, the position of the sample 12 in the cuvette 11. The first sample holder 10 and sample fixing plate 20 which are fitted together are shown in side view in Figures 6A and 6B.

At least one slot 23 is formed next to each insert 21 of the sample fixing plate 20, said slot 23 is formed between the two adjacent inserts 21 shown in Figure 1. The slot 23 ensures the passage of the light emitted by the light-sheet microscope, which is thus able to illuminate the sample 12 in the cuvette 11. The sample fixing plate 20 also comprises at least two magnets 24 arranged opposite each other. In the embodiment according to Figure 1, two magnets 24 arranged opposite each other together with the magnets 35 of a sample holder frame 30 (not shown in Figure 1) serve to prevent the inserted sample fixing plate 20 from slipping.

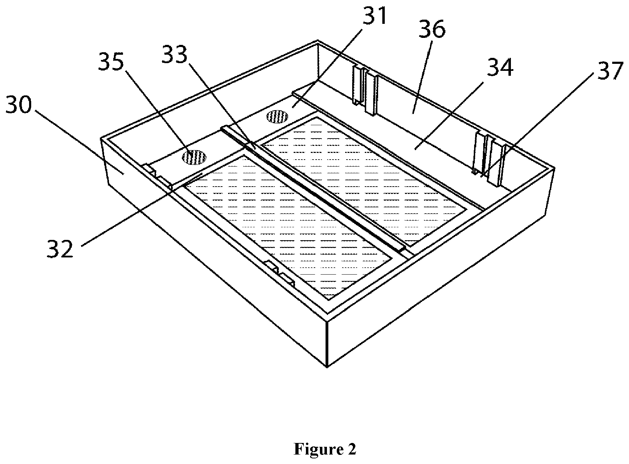

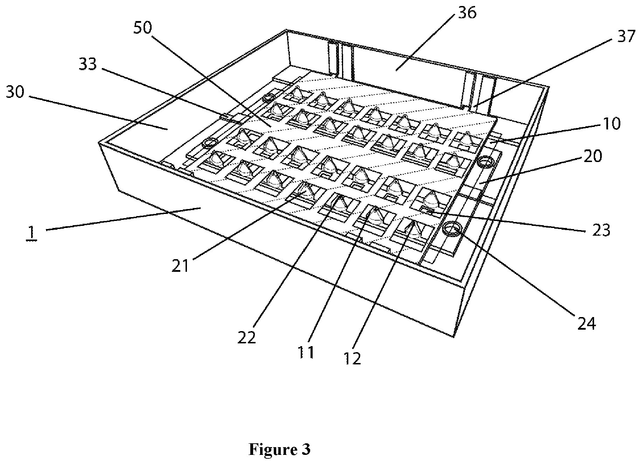

Figure 2 shows a preferred embodiment of the sample holder frame 30 of the plate assembly 1 according to the invention in a perspective view. The aim of the sample holder frame 30 is to receive the sample holder 10 and the sample fixing plate 20, which are in a nested position. This assembly is shown in Figure 3. The sample holder frame 30 comprises a flat sheet 31 arranged in a plane, which substantially corresponds to the bottom of the sample holder frame 30. The sheet 31 comprises at least one receiving element 32, which is configured to receive the sample holder 10 and the sample fixing plate 20 inserted therein, wherein the bottom of the receiving element 32 is made of transparent material to provide a free path for the light of the light-sheet microscope to the samples 12. The material of the bottom of the receiving element 32 can be transparent plastic, transparent resin, transparent FEP (fluorinated ethylenepropylene) foil, or particularly preferably glass, the thickness of which can be about 150 *µ*m, thus allowing the transmission of light. Except for the bottom of the receiving element 32, the sample holder frame 30 can be made of plastic, resin, and/or metal, and can preferably be produced by 3-dimensional printing. The sample holder frame 30 according to Figure 2 comprises two receiving elements 32, however, the sample holder frame 30 may also comprises more than one, preferably two, particularly preferably four receiving elements 32 arranged next to each other, which are separated from each other by a partition wall 33. The dimensions of the receiving element 32 may correspond to the dimensions of a standard slide.

The sample holder frame 30 according to Figure 2 comprises a planar flat edge 34 that extends around the circumference of the sheet 31. The flat design of the edge 34 ensures, on the one hand, the gap-free and liquid-tight fitting of the sample holder 10 and the sample fixing plate 20 inserted therein into the receiving element 32, and, on the other hand, after proper positioning of a light-sheet microscope, the dimensions of the flat edge 34 allow the scanning unit of said light microscope to operate continuously. This essentially means that the flat edge 34 formed in the sheet 31, around the receiving element 32 or the receiving elements 32, has dimension compatible with the unit for scanning the samples 12 of a light-sheet microscope, i.e. with the unit that ensures the reflection of the light emitted by the light-sheet microscope and the direction of the light to the samples 12, so that in the case of more samples 12 to be examined, there is no need to interrupt the operation of the light-sheet microscope, and then reposition and recalibrate the microscope. The scanning unit of the light-sheet microscope preferably uses a so-called twin-mirror ("*TwinFleckt mirror*") technology or two objectives, wherein the two mirrors or two objectives are arranged at an angle of 45 degrees or 90 degrees to each other, so that the light emitted by the microscope is deflected at an angle of 45 or 90 degrees, thus enabling the examination of samples 12 in a horizontal direction.

The sample holder frame 30 also comprises at least two oppositely arranged magnets 35, which are placed in the flat sheet 31. In the case of the embodiment according to Figure 2, the sample holder frame 30 comprises four magnets 35, two of which are arranged opposite each other, but the figure only shows two magnets 35 located on one side of the sample holder frame 30. The position of the individual magnets 35 substantially matches with the position of the magnets 24 arranged in the sample fixing plate 20 to ensure the connection of the magnets 24, 35 with each other. The magnets 24, 35 of the sample holder frame 30 according to Figure 2 and the sample fixing plate 20 according to Figure 1 are designed to connect to each other.

The sample holder frame 30 according to Figure 2 also comprises a circumferentially extending, protruding side wall 36. Each of at least two opposite parts of the side wall 36 according to the invention comprises at least one L-shaped groove 37. The sample holder frame 30 according to Figure 2 comprises two L-shaped grooves 37 provided on both opposite sides of the peripheral side wall 36, wherein two L-shaped grooves 37 are arranged next to each other on each side. If the sample holder frame 30 comprises L-shaped grooves 37, then the sample fixing plate 20 comprises fixing tabs arranged opposite each other, and/or the plate assembly 1 comprises a grid clamping element 50 (which is not shown in Figure 2), which can be slid into the L-shaped groove 37 and it can be fixed in it, thus ensuring the stability of the plate assembly 1, i.e. ensuring the non-slip position of the 10 sample holder elements and 20 sample holder plates fitted together in the receiving element 32 of the sample holder frame 30 (see Figure 3).

Figure 3 is a perspective view of the assembled plate assembly 1 according to the invention with a grid clamping element 50. Figure 3 shows the sample holder 10 and the sample fixing plate 20 according to Figure 1, as well as the sample holder frame 30 according to Figure 2, which are joined together, wherein the grid clamping element 50 is placed on top of these elements and pushes down said elements. In the embodiment according to Figure 3, the sample holder 10 comprises 14-14 pieces of cuvettes 11 and the sample fixing plate 20 correspondingly comprises 14-14 pieces of inserts 21, which are inserted into the cuvettes 11, so this arrangement is suitable for testing a total number of 28 pieces of samples 12. The fitted cuvettes 11 and inserts 21 are placed in two receiving elements 32 arranged next to each other, wherein 14 pieces of fitted cuvettes 11 and inserts 21 are placed in each receiving element, in such a way that the pairs of cuvettes 11 and inserts 21 is in an upward position, so that due to the transparent bottom of the receiving element 32, a light-sheet microscope can illuminate each sample 12 from below. In addition to illumination from below with a standard light-sheet microscope, the plate assembly according to the invention can also be suitable for use with an inverse light-sheet microscope. When an inverse light-sheet microscope is used, the pairs consisting of cuvettes 11 and inserts 21 inserted into each other are in a downward position, but the samples 12, which are also fixed in their respective positions, are illuminated from below. Furthermore, the assembly according to the invention can be suitable for use with any light-emitting microscopes capable of illuminating the samples 12 from below. Such an additional application can be, for example, an application with a single-objective light sheet microscope, wherein it is possible to illuminate the samples 12 from below, regardless of the position of the plate assembly 1. In Figure 3, only the magnets 24 of the sample fixing plate 20 are visible from above, which are connected to the magnets 35 of the sample holder frame 30 in the same position (not shown in the Figure 3), thus ensuring the stability of the plate assembly 1 to complement the stabilization provided by the grid clamping element 50. The preferred embodiment according to Figure 3 also comprises a grid clamping element 50, which is slid into four L-shaped grooves 37 of the sample holder frame 30 and fixed therein to secure the clamping of the assembled first sample holder element 10 and the sample holder plate 20 onto the sample holder frame 30. The sample fixing plate 20 may comprises fixing tabs (not shown in the Figure 3), which, when slid into the L-shaped groove 37, may also be suitable for stabilizing the plate assembly 1. Optionally, the fixing tabs of the sample fixing plate 20 and the grid clamping element 50 can also be used together.

A preferred embodiment of the plate assembly 1 also comprises a second sample holder 40 (not shown in the Figure 3), which is a transparent foil sheet and comprises a plurality of cuvettes 41, which can be inserted into the cuvettes 11 of the first sample holder 10 in such a way that a chamber 42 ensuring the integrity of the structure of a single sample 12 is formed between the first sample holder 10 and the second sample holder 40, in the cuvettes 11 of the first sample holder 10. In this case, the second sample holder 40 takes over the role of the sample fixing plate 20 to form the chamber 42 capable of receiving a single sample 12 in each cuvette 11 of the first sample holder 10. In this case, the chamber 42 is formed between two transparent foil sheets, the material of which is selected from at least one of the following: ECTFE foil (ethylene-chlorotrifluoroethylene), THV foil (tetrafluoroethylene-hexafluoropropylene-vinylidene fluoride), PFA foil (perfluoroalkoxy), PFA-PG foil, PFA-GK foil, PTFE (polytetrafluoroethylene, Teflon) foil, especially FEP (fluorinated ethylene propylene) foil. This embodiment is particularly preferable in the case that the sample 12 is a 3-dimensional sample of living cells since the foil material is not toxic to living cells. The thickness of the foil sheet is between 25-100 *µ*m, preferably between 5-10 *µ*m. The first sample holder 10 and the second sample holder 40, especially their cuvettes 11, 41, can preferably be formed by vacuum forming. Furthermore, each cuvette 41 of the second sample holder 40 is configured to receive each insert 21 of the sample fixing plate 20. This means that the inserts 21 of the sample holder 20 can also be inserted into the cuvettes 41 of the second sample holder 40 inserted into the cuvettes 11 of the first sample holder 10, so that three elements are inserted one after the other. Although the chamber 42 capable of receiving samples 12 is formed by the first sample holder 10 and the second sample holder 40, but the sample fixing plate 20 is needed to stably fix them in the sample holder frame 30. Preferably, the number of cuvettes 11 of the first sample holder 10, the number of cuvettes 41 of the second sample holder 40, and the number of inserts 21 of the sample fixing plate 20 are the same. Preferably, each of the following elements is integrally formed from a single piece, separately: the first sample holder 10, optionally the second sample holder 40, as well as the sample fixing plate 20.

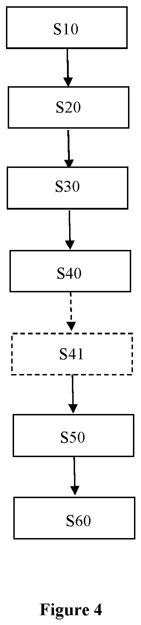

Figure 4 shows a flow diagram of a method according to the invention for the use of one embodiment of the plate assembly 1, which embodiment is shown in Figure 3. The method according to Figure 4 comprises:
- in step 10, providing a first sample holder 10 having cuvettes 11 and filling each cuvette 11 with a sample 12 stored in mounting medium, cell culture medium, and/or hydrogel
- in step 20, providing a sample fixing plate 20 having inserts 21 and inserting said inserts 21 into the cuvettes 11 of the first sample holder 10 containing samples 12, thereby a chamber 22 is formed, which has a volume that ensures the integrity of the structure of a single sample 12,
- in step 30, providing a sample holder frame 30 and placing the sample fixing plate 20 inserted into the first sample holder 10 in a receiving element 32 of the sample holder 30, thereby assembling the plate assembly 1,
- in step 40, connecting magnets 24 of the sample fixing plate 20 and magnets 35 of the sample holder frame 30 to stably fix the plate assembly 1,
- in step 50, inverting the plate assembly 1 in such a way that the cuvettes 11 of the first sample holder element 10 filled with samples 12 face upwards, and
- in step 60, illuminating the plate assembly 1 from below with a light-sheet microscope for examining the samples 12.

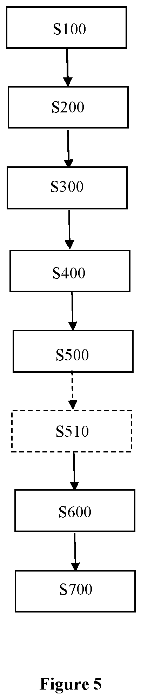

Figure 5 shows a flow diagram of a method according to the invention for the use of an embodiment of the plate assembly 1, wherein the plate assembly 1 comprises a first sample holder 10, a second sample holder 40, a sample fixing plate 20 and a sample holder frame 30. The method according to Figure 5 comprises:
- in step 100, providing a first sample holder 10 having cuvettes 11 and filling each cuvette 11 with a sample 12 stored in mounting medium, cell culture medium, and/or hydrogel,
- in step 200, providing a second sample holder 40 having cuvettes 41 and inserting said cuvettes 41 into the cuvettes 11 of the first sample holder 10 containing samples 12, thereby a chamber 42 is formed, which has a volume that ensures the integrity of the structure of a single sample 12,
- in step 300, providing a sample fixing plate 20 having inserts 21 and inserting said inserts 21 into the cuvettes 41 of the second sample holder 40,
- in step 400, providing a sample holder frame 30 and placing the first sample holder 10, the second sample holder 40, and the sample fixing plate 20 in a receiving element 32 of the sample holder frame 30, which are aligned one after the other, thereby assembling the plate assembly 1,
- in step 500, connecting magnets 24 of the sample fixing plate 20 and magnets 35 of the sample holder frame 30 to stably fix the plate assembly 1,
- in step 600, inverting the plate assembly 1 in such a way that the cuvettes 11 of the first sample holder element 10 filled with samples 12 face upwards,
- in step 700, illuminating the plate assembly 1 from below with a light-sheet microscope for examining the samples 12.

In the case of the methods according to Figures 4 and 5, preferably at least the first 10 sample holder is sterilized, particularly preferably that parts of the plate assembly 1 in direct contact with the sample 12 are sterilized. Sterilization can be done with UV light, disinfecting washing, for example with alcohol washing, ultrasonic cleaning, or any other disinfecting method that does not create conditions, especially temperature changes, that could cause damage or distortion in the material of the plate assembly 1.

In both the methods according to Figures 4 and 5, it is possible to use several receiving elements 32 of the sample holder frame 30 simultaneously for continuous examination of the samples 12, without recalibration of the light-sheet microscope. The flat edge 34 of the sample holder frame 30 enables the uninterrupted operation of the light-sheet microscope.

The methods according to Figures 4 and 5 show the application of an advantageous embodiment of the plate assembly 1, wherein each method can be supplemented with the following optional method steps:
- in step S41 for the method according to Figure 4, and in step S510 for the method according to Figure 5, before inverting the plate assembly 1, sliding and stably securing fixing tabs of the sample fixing plate 20, and/or grid clamping element 50 into the L-shaped grooves 37 formed on side walls 36 of the sample holder frame 30, thereby also ensuring the stability of the plate assembly 1.

In the methods described above, each cuvette 11 of the first sample holder 10 is preferably first filled with a mounting medium, cell culture medium, and/or hydrogel and then filled with a sample 12 each. Furthermore, during the method described above, individual cuvettes 11 of the first sample holder 10 can be filled with samples 12 manually or with a pipetting robot, wherein each sample 12 stored in a mounting medium, cell culture medium, and/or hydrogel can be filled into the cuvettes 11 of the first sample holder 10. As previously defined, the cuvettes 11 by themselves without the insertion of the inserts 21 of the sample fixing plate 20 or, optionally, without the insertion of the cuvettes 41 of the second sample holder 40 can be suitable for receiving several samples 12 at the same time. However, the insertion of the inserts 21 or, optionally, the cuvettes 41 forms chambers 22 or 42 with specific dimensions, which ensures damage-free storage of a single sample 12. In the event that more than one sample 12 is filled into a single cuvette 11 during the filling of the cuvettes 11, the insert 21 or the cuvette 41 will destroy these several samples after their insertion, since the volume of the chamber 22 or 42 is only suitable for receiving a single sample 12. Then, when examining with a light-sheet microscope, said single 11 cuvette comprising several 12 samples can be interpreted as "waste" or "error" and is not suitable for evaluation, so there cannot be a case where a given 12 sample cannot be accurately identified during the microscopic examination.

In the previously described methods, the first sample holder 10 and the second sample holder 40, especially the cuvettes 11 and 41, are preferably made from a FEP (fluorinated ethylene propylene) foil by vacuum forming.

In the method according to Figure 5, 3-dimensional cell culture of living cells is preferably used as sample 12, since the material of the foil, which is preferably FEP foil, is not toxic to living cells.

In both the methods according to Figures 4 and 5, the sample holder frame 30 is preferably produced by 3-dimensional printing.

The solution according to the invention can also comprise a method which essentially modifies the method according to Figures 4 and 5 in such a way that instead of step S10 or S100, it comprises the following method steps:
- in step S7, providing a first sample holder 10 having cuvettes 11 and sterilizing it. Sterilization can be done in the manner mentioned earlier, i.e., any sterilization can be used that does not damage or distort the material or shape of the plate assembly 1, in this step the material and shape of the first sample holder 10.
- In step S8, filling the cuvettes 11 of the sterilized first sample holder 10 with a sample forming material 9 and optionally a cell culture medium. The sample forming material 9 can be a cell suspension, i.e., single cells in a cell culture medium, or one or more small cell aggregates in a cell culture medium. The sample-forming material 9 can also be several single cells placed in a hydrogel, or one or more small cell aggregates placed in a hydrogel. In step S8, filling an amount of sample-forming material 9 and optionally cell culture medium corresponding to the volume of the cuvettes 11, which is preferably approximately 2-15 µl in total. The cuvettes 11 can be filled on the one hand by first filling the cell culture medium, and/or hydrogel, and then the single cells and one or more small cell aggregates. The cell culture medium ensures the growth of the cells, which is necessary for the growth of the samples 12. On the other hand, the filling can also be done by filling single cells, or one or more small cell aggregates with the cell culture medium, and/or hydrogel into the cuvettes 11 at the same time. The cuvettes 11 can be filled manually or with the help of a pipetting robot.
- In step S9, placing the first sample holder 10 having cuvettes 11 filled with sample forming material 9 and cell culture medium in an incubator until a sample 12 is obtained. In this case the samples 12 are a 3-dimensional cell culture of living cells. The dimensions of the appropriate size samples 12 grown in steps S7-S9 allow steps S20 or S200 to be performed, i.e., the volume of chamber 22 or 42 is suitable to ensure the integrity of the structure of the grown single sample 12. In step S9, the general methods required for the growth of a given sample 12 are applied, which are not described in detail. The sample 12 grown in steps S7-S9 are substantially of a size corresponding to the size of the sample 12 used in steps S10 or S100. The samples 12 having suitable size can be grown primarily - by choosing the appropriate environmental conditions - by selecting the number of single cells or the amount of one or more cell aggregates in the sample-forming material 9 in accordance with the volume of the cuvette 11, as well by adjusting the incubation time to the rate of cell growth. Accordingly, in the case of a larger number of single cells, or a larger size cell aggregate, or a larger number of small cell aggregates, samples 12 of appropriate size can be obtained with a shorter incubation time. If the number of single cells is lower, or the size of a cell aggregate is smaller, or the number of several small cell aggregates is lower, a longer incubation time may be required to reach the samples 12 having appropriate size. It is necessary to choose the above parameters in a way that takes into account the volume of the cuvettes 11.
- After steps S7-S9, as soon as the 12 sample is obtained, performing the previously described steps S20-S60, or steps S200-S700 one after the other.

The use of hydrogel in steps S7-S9 can be particularly advantageous, since the gelatinous substance of the hydrogel is suitable for fixing the position of the sample 12. In this case, it is not absolutely necessary to perform the preferred steps S41 or S510.

In steps S7-S9 presented above, the cell culture is substantially carried out in the plate assembly 1, in contrast to the steps S10 or S100, wherein the already cultured or available samples 12 are filled into the cuvettes 11. The drawing of the method including the steps S7-S9 is not presented in the present document. The method including the cell culture steps can be used for all embodiments of the plate assembly 1 since the material of the plate assembly 1 does not damage the single cells or aggregates in the sample-forming material 9, or the sample 12, so it may even be suitable for long-term use.

Steps S7-S9 are preferably performed in a sterile environment, such as a biological safety cabinet.

Figures 6A and 6B show the use of the solution according to the invention with a light-sheet microscope for two embodiments of the plate assembly 1, in side view. The plate assembly 1 according to Figure 6A comprises a first sample holder 10 and a sample fixing plate 20, wherein the first sample holder 10 comprises cuvettes 11, and the sample fixing plate 20 comprises inserts 21, in the exemplary embodiment shown in Figure 6A, a single sample 12 is filled into a cuvette 11, and then the inserts 21 are inserted into the cuvettes 11, including the cuvette 11 with the sample 12, thus forming a chamber 22. Then the assembled arrangement is turned over so that it is placed in this inverted position into the scanning unit of the light-sheet microscope. The sample 12 is examined with the light emitted by the light-sheet microscope, i.e., with laser light, which illuminates the sample 12 so that the laser light is reflected from the scanning unit, thus mapping the structure of the sample 12.

The plate assembly 1 according to Figure 6B comprises a first sample holder 10, a second sample holder 40 and a sample fixing plate 20, wherein the first sample holder 10 comprises cuvettes 11, the second sample holder 40 comprises 41 cuvettes, and the sample fixing plate 20 comprises inserts 21. In this plate assembly 1, a single sample 12 is filled into a cuvette 11, and then the cuvettes 41 are inserted into the cuvettes 11, including the cuvette 11 with the samples 12, thus forming a chamber 42. Inserts 21 are then inserted into this assembled arrangement in such a way that the inserts 21 are in direct contact with the cuvettes 41, but they are not in direct contact with the cuvettes 11 and thus with the sample 12 either. Then the assembled arrangement is turned over and placed in this inverted position in the scanning unit of the light-sheet microscope. The laser light emitted by the light-sheet microscope can also determine the structure of the sample 12 as shown in Figure 6A.

The advantage of using the plate assembly according to the invention is that it is suitable for the simultaneous examination of a large number of 3-dimensional cell cultures, including 3-dimensional cell cultures of living cells, as well as tissue samples in such a way that the light-sheet microscope does not need to be repositioned and recalibrated, so a large number of samples of the same quality can be examined in a shorter time and with fewer errors.

The advantage of the plate assembly according to the invention is that the slippage of the samples and the individual elements is doubly ensured, on the one hand, by the magnetic fixation of the sample fixing plate and sample holder frame, and on the other hand, by the use of the fixing tabs, and/or grid clamping element. Stabilizing the plate assembly also greatly reduces the chance of poor-quality recordings.

A pair of joined cuvette and insert, or optionally an arrangement of joined cuvette-cuvette-insert of the plate assembly according to the invention creates a chamber with a volume suitable for receiving a single 3-dimensional sample, so that the structure of a single sample per cuvette can be examined simultaneously during the test.

The plate assembly according to the invention can be used with a light-sheet microscope for the rapid, automatic examination of 3-dimensional samples with a high penetration depth and low phototoxicity. Particularly preferably, it can be used with a light-sheet microscope that uses *"TwinFlect mirror"* technology to scan the samples.

The plate assembly according to the invention can comprises several cuvettes for the samples in different arrangements, preferably in an arrangement that provides sufficient space for the multi-channel manual or robotic pipetting unit. The embodiments described in the above figures are only preferred embodiments, the plate assembly according to the invention is not limited to these embodiments.

## Claims

1. A plate assembly (1) for rapid, automatic, high penetration depth examination of samples (12) with a light-sheet microscope having a scanning unit,
wherein the plate assembly (1) comprises:
- a first sample holder (10) configured to receive a plurality of samples (12) separated from each other, said first sample holder (10) being a transparent foil sheet and comprising a plurality of cuvettes (11), wherein each cuvette (11) is configured to receive a single sample (12),
the plate assembly (1) further comprising
- a sample fixing plate (20) configured to position the samples (12) placed in the cuvettes (11), wherein the sample fixing plate (20) comprises a plurality of inserts (21), each individual insert (12) being insertable into one of the cuvettes (11) of the first sample holder (10) in such a way that a chamber (22) is formed between the first sample holder (10) and the inserted sample fixing plate (20) in each individual cuvette (11), said chamber (22) being configured to ensure integrity of a structure of a single sample (12) in the respective individual cuvettes (11) of the first sample holder (10), wherein
at least one slot (23) is formed next to each insert (21) to allow the transmission of light emitted by the light-sheet microscope,
said sample fixing plate (20) further comprising at least two opposite magnets (24),
- a sample holder frame (30) configured to receive the sample holder (10) and the sample fixing plate (20) fitted to each other, said sample holder frame (30) having a planar flat sheet (31), which comprises at least one receiving element (32) configured to receive the first sample holder (10) and the sample fixing plate (20) inserted therein, wherein
the bottom of the receiving element (32) is made of transparent material,
said sample holder frame (30) comprising a planar flat edge (34) extending around a circumference of the sheet (31), wherein the dimensions of said edge (34) is configured to allow the scanning unit of the light-sheet microscope to operate continuously,
wherein the sample holder frame (30) further comprises at least two opposite magnets (35) located in the edge (34), wherein the position of each individual magnet (35) in the edge (34) substantially matches the position of one of the magnets (24) arranged in the sample fixing plate (20) to connect said magnets (24, 35) to each other and thereby hold the sample fixing plate (20) stable in an inserted position.

2. The plate assembly (1) according to claim 1, further comprising a second sample holder (40), which is a transparent foil sheet and comprises a plurality of cuvettes (41), each individual cuvette (41) being insertable into a respective cuvette (11) of the first sample holder (10) in such a way that a chamber (42) is formed between the first sample holder (10) and the second sample holder (40) in each individual cuvette (11), said chamber (42) being configured to ensure integrity of the structure of said single sample (12) in the respective individual cuvettes (11) of the first sample holder (10), and wherein each individual cuvette (41) of the second sample holder (40) is configured to receive individual inserts (21) of said sample fixing plate (20).

3. The plate assembly (1) according to claim 1 or 2, **characterized in that** the sample holder frame (30) further comprises a circumferentially extending, protruding side wall (36), wherein each of at least two opposite parts of the side wall (36) comprises at least one L-shaped groove (37), and the sample fixing plate (20) comprises fixing tabs arranged opposite each other and/or the plate assembly (1) further comprises a grid clamping element (50), each of which is suitable for inserting into the grooves (37) and can be fixed stably to press down the sample fixing plate (20) in the inserted position, respectively.

4. The plate assembly (1) according to any one of claims 1 to 3, **characterized in that** each individual chamber (22, 42) formed in the cuvettes (11) of the first sample holder (10) is configured to receive a sample (12) and a mounting medium, cell culture medium and/or hydrogel together.

5. The plate assembly (1) according to any one of claims 1 to 4, **characterized in that** the sample holder frame (30) comprises more than one, preferably two, particularly preferably four receiving elements (32), the dimensions of said receiving elements (32) correspond to the dimensions of a standard slide, wherein each receiving element (32) is arranged next to each other and separated from each other by a partition wall (33).

6. The plate assembly (1) according to any one of claims 1 to 5, **characterized in that** a thickness of the bottom of the receiving elements (32) is about 150 *µ*m and is made of a material selected from glass, transparent plastic, transparent resin, or transparent FEP (Fluorinated Ethylene Propylene) foil.

7. The plate assembly (1) according to any one of claims 2 to 6, **characterized in that** the first sample holder (10) and the second sample holder (40) are a transparent foil sheet selected from at least one of the following: ECTFE foil (ethylene-chlorotrifluoroethylene), THV foil (tetrafluoroethylene-hexafluoropropylene-vinylidene fluoride), PFA foil (perfluoroalkoxy), PFA-PG foil, PFA-GK foil, PTFE (polytetrafluoroethylene, Teflon) foil, especially FEP foil, wherein the thickness of the foil sheet is between 25-100 *µ*m, preferably between 5-10 *µ*m, and wherein the first sample holder (10) and second sample holder (40) are formed by vacuum forming.

8. The plate assembly (1) according to any one of claims 1 to 7, **characterized in that** the sample holder frame (30), except for the bottom of the receiving element (32), is made of plastic, resin, and/or metal.

9. The plate assembly (1) according to any one of claims 1 to 8, **characterized in that** the sample (12) is a 3-dimensional cell culture or tissue sample.

10. A method of using the plate assembly (1) according to any one of claims 1 to 9, comprising the steps of:
- providing (S10) the first sample holder (10) having cuvettes (11) and filling each cuvette (11) with a sample (12) stored in mounting medium, cell culture medium, and/or hydrogel,
- providing (S20) the sample fixing plate (20) having inserts (21) and inserting said inserts (21) into the cuvettes (11) of the first sample holder (10) containing samples (12), thereby forming a chamber (22) having a volume that ensures integrity of the structure of said single sample (12),
- providing (S30) the sample holder frame (30) with a receiving element (32) and placing the sample fixing plate (20) inserted into the first sample holder (10) in said receiving element (32), thereby assembling the plate assembly (1),
- connecting (S40) magnets (24) of the sample fixing plate (20) and magnets (35) of the sample holder frame (30) to stably fix the plate assembly (1),
- inverting (S50) the plate assembly (1) in such a way that the cuvettes (11) of the first sample holder element (10) filled with samples (12) face upwards,
- illuminating (S60) the plate assembly (1) from below with a light-sheet microscope for examining the samples (12).

11. A method of using the plate assembly (1) according to any one of claim 2 and claims 3-9 when depending on claim 2, comprising the steps of:
- providing (S100) the first sample holder (10) having cuvettes (11) and filling each cuvette (11) with a sample (12) stored in mounting medium, cell culture medium, and/or hydrogel,
- providing (S200) the second sample holder (40) having cuvettes (41) and inserting said cuvettes (41) into the cuvettes (11) of the first sample holder (10) containing samples (12), thereby a chamber (42) is formed, which has a volume that ensures the integrity of the structure of a single sample (12),
- providing (S300) the sample fixing plate (20) having inserts (21) and inserting said inserts (21) into the cuvettes (41) of the second sample holder (40),
- providing (S400) the sample holder frame (30) having receiving element (32) and placing the first sample holder (10), the second sample holder (40), and the sample fixing plate (20) in said receiving element (32), which are aligned one after the other, thereby assembling the plate assembly (1),
- connecting (S500) magnets (24) of the sample fixing plate (20) and magnets (35) of the sample holder frame (30) to stably fix the plate assembly (1),
- inverting (S600) the plate assembly (1) in such a way that the cuvettes (11) of the first sample holder element (10) filled with samples (12) face upwards,
- illuminating (S700) the plate assembly (1) from below with a light-sheet microscope for examining the samples (12).

12. The method according to claim 10 or claim 11, wherein first filling each cuvette (11) of the first sample holder (10) with a mounting medium, cell culture medium, and/or hydrogel, and then filling with the sample (12).

13. The method according to any one of claims 10 to 12, wherein filling each cuvette (11) of the first sample holder (10) with the sample (12) stored in a mounting medium, cell culture medium, and/or hydrogel, manually or with a pipetting robot.

14. The method according to any one of claims 10 to 13, wherein the sample (12) is a 3-dimensional cell culture or tissue sample.

15. A method of using the plate assembly (1) according to any one of claims 1 to 9, comprising the steps of:
- providing (S7) the first sample holder (10) having cuvettes (11) and sterilizing it,
- filling (S8) the cuvettes (11) of the sterilized first sample holder (10) with sample-forming material (9) and optionally with cell culture medium,
- placing (S9) the first sample holder (10) in an incubator, wherein the cuvettes (11) of which are filled with sample-forming material (9) and optionally with cell culture medium, until obtaining a sample (12), then
- sequentially performing steps S20-S60 as set forth in claim 10 or steps S200-S700 as set forth in claim 11.

16. The method according to claim 15, wherein the sample-forming material (9) comprises single cells in a cell culture medium or hydrogel, or one or more small cell aggregates and wherein the sample (12) is a 3-dimensional cell culture of living cells.

17. The method according to claim 15 or 16, further comprising performing steps S7-S9 in a sterile environment.

18. The method according to any one of claims 10 to 17, further comprising simultaneously using several receiving elements (32) of the sample holder frame (30) for continuous examination of the samples (12), without recalibration of the light-sheet microscope.

19. The method according to any one of claims 10 to 18, wherein the plate assembly is a plate assembly (1) according to any one of claims 4 to 9, further comprising the step of
- before inverting the plate assembly (1), sliding and stably securing (S41 or S510) fixing tabs of the sample fixing plate (20) and/or grid clamping element (50) into the L-shaped grooves (37) formed on side walls (36) of the sample holder frame (30).

20. The method according to any one of claims 10 to 19, further comprising the step of producing any of said first sample holder (10) and said second sample holder (40) from a FEP (fluorinated ethylene propylene) foil by vacuum forming.

## Patentansprüche

1. Eine Plattenanordnung (1) zur schnellen, automatischen Untersuchung von Proben (12) mit hoher Eindringtiefe mittels eines Lichtblattmikroskops, das eine Abtasteinheit aufweist,
wobei die Plattenanordnung (1) umfasst:
- einen ersten Probenhalter (10), der zur Aufnahme einer Vielzahl voneinander getrennter Proben (12) ausgebildet ist, wobei der erste Probenhalter (10) eine transparente Folie ist und eine Vielzahl von Küvetten (11) umfasst, wobei jede Küvette (11) zur Aufnahme einer einzelnen Probe (12) ausgebildet ist,
wobei die Plattenanordnung (1) ferner umfasst:
- eine Probenfixierplatte (20), die dazu ausgelegt ist, die in die Küvetten (11) eingesetzten Proben (12) zu positionieren, wobei die Probenfixierplatte (20) eine Vielzahl von Einsätzen (21) umfasst, wobei jeder einzelne Einsatz (21) in eine der Küvetten (11) des ersten Probenhalters (10) derart einsetzbar ist, dass in jeder einzelnen Küvette (11) eine Kammer (22) zwischen dem ersten Probenhalter (10) und der eingesetzten Probenfixierplatte (20) gebildet wird, wobei die Kammer (22) derart ausgelegt ist, dass die Integrität der Struktur einer einzelnen Probe (12) in den jeweiligen einzelnen Küvetten (11) des ersten Probenhalters (10) gewährleistet ist, wobei
mindestens ein Schlitz (23) neben jedem Einsatz (21) ausgebildet ist, um den Durchgang des vom Lichtblattmikroskop emittierten Lichts zu ermöglichen,
wobei die Probenfixierplatte (20) ferner mindestens zwei gegenüberliegende Magnete (24) umfasst,
- einen Probenhalterrahmen (30), der derart ausgebildet ist, den Probenhalter (10) und die Probenfixierplatte (20) in zueinander passender Anordnung aufzunehmen, wobei der Probenhalterrahmen (30) eine ebene Platte (31) aufweist, die mindestens ein Aufnahmeelement (32) umfasst, das derart ausgebildet ist, den ersten Probenhalter (10) und die darin eingesetzte Probenfixierplatte (20) aufzunehmen, wobei
der Boden des Aufnahmeelements (32) aus transparentem Material hergestellt ist, wobei der Probenhalterrahmen (30) eine ebene, flache Kante (34) umfasst, die sich um den Umfang der Platte (31) erstreckt, wobei die Abmessungen der Kante (34) derart ausgelegt sind, einen kontinuierlichen Betrieb der Abtasteinheit des Lichtblattmikroskops zu ermöglichen,
wobei der Probenhalterrahmen (30) ferner mindestens zwei gegenüberliegende Magnete (35) umfasst, die in der Kante (34) angeordnet sind, wobei die Position jedes einzelnen Magneten (35) in der Kante (34) im Wesentlichen mit der Position eines der in der Probenfixierplatte (20) angeordneten Magnete (24) übereinstimmt, um die Magnete (24, 35) miteinander zu verbinden und dadurch die Probenfixierplatte (20) in einer eingesetzten Position stabil zu halten.

2. Die Plattenanordnung (1) nach Anspruch 1, ferner umfassend einen zweiten Probenhalter (40), der eine transparente Folie ist, die eine Vielzahl von Küvetten (41) umfasst, wobei jede einzelne Küvette (41) in eine jeweilige Küvette (11) des ersten Probenhalters (10) derart einsetzbar ist, dass in jeder einzelnen Küvette (11) eine Kammer (42) zwischen dem ersten Probenhalter (10) und dem zweiten Probenhalter (40) gebildet wird, wobei die Kammer (42) derart ausgebildet ist, dass sie die Integrität der Struktur der einzelnen Probe (12) in den jeweiligen einzelnen Küvetten (11) des ersten Probenhalters (10) gewährleistet, und wobei jede einzelne Küvette (41) des zweiten Probenhalters (40) zur Aufnahme einzelner Einsätze (21) der Probenfixierplatte (20) ausgebildet ist.

3. Die Plattenanordnung (1) nach Anspruch 1 oder 2, **dadurch gekennzeichnet, dass** der Probenhalterrahmen (30) ferner eine sich in Umfangsrichtung erstreckende, vorstehende Seitenwand (36) umfasst, wobei jeder von mindestens zwei gegenüberliegenden Abschnitten der Seitenwand (36) mindestens eine L-förmige Nut (37) umfasst, und die Probenfixierplatte (20) einander gegenüberliegend angeordnete Befestigungslaschen umfasst und/oder die Plattenanordnung (1) ferner ein Gitterklemmelement (50) umfasst, von denen jedes zum Einführen in die Nuten (37) geeignet ist und jeweils stabil fixiert werden kann, um die Probenfixierplatte (20) in der eingeführten Position jeweils nach unten zu drücken.

4. Die Plattenanordnung (1) nach einem der Ansprüche 1 bis 3, **dadurch gekennzeichnet, dass** jede einzelne Kammer (22, 42), die in den Küvetten (11) des ersten Probenhalters (10) ausgebildet ist, dafür konfiguriert ist, eine Probe (12) und ein Einbettmedium, ein Zellkulturmedium und/oder ein Hydrogel gemeinsam aufzunehmen.

5. Die Plattenanordnung (1) nach einem der Ansprüche 1 bis 4, **dadurch gekennzeichnet, dass** der Probenhalterrahmen (30) mehr als ein, vorzugsweise zwei, besonders bevorzugt vier Aufnahmeelemente (32) umfasst, wobei die Abmessungen der Aufnahmeelemente (32) den Abmessungen eines Standardobjektträgers entsprechen, wobei die einzelnen Aufnahmeelemente (32) nebeneinander angeordnet und durch eine Trennwand (33) voneinander getrennt sind.

6. Die Plattenanordnung (1) gemäß einem der Ansprüche 1 bis 5, **dadurch gekennzeichnet, dass** eine Dicke des Bodens der Aufnahmeelemente (32) etwa 150 *µ*m beträgt und aus einem Material hergestellt ist, das aus Glas, transparentem Kunststoff, transparentem Harz oder transparenter FEP-Folie (fluorierter Ethylen-Propylen-Folie) ausgewählt ist.

7. Die Plattenanordnung (1) nach einem der Ansprüche 2 bis 6, **dadurch gekennzeichnet, dass** der erste Probenhalter (10) und der zweite Probenhalter (40) eine transparente Folie sind, die aus mindestens einem der folgenden Materialien ausgewählt ist: ECTFE-Folie (Ethylen-Chlortrifluorethylen), THV-Folie (Tetrafluorethylen-Hexafluorpropylen-Vinylidenfluorid), PFA-Folie (Perfluoralkoxy), PFA-PG-Folie, PFA-GK-Folie, PTFE-Folie (Polytetrafluorethylen, Teflon), insbesondere FEP-Folie, wobei die Dicke der Folie zwischen 25 *µ*m und 100 *µ*m, vorzugsweise zwischen 5 *µ*m und 10*µ* m, beträgt, und wobei der erste Probenhalter (10) und der zweite Probenhalter (40) durch Vakuumformen hergestellt sind.

8. Die Plattenanordnung (1) nach einem der Ansprüche 1 bis 7, **dadurch gekennzeichnet, dass** der Probenhalterrahmen (30), mit Ausnahme des Bodens des Aufnahmeelements (32), aus Kunststoff, Harz und/oder Metall hergestellt ist.

9. Die Plattenanordnung (1) nach einem der Ansprüche 1 bis 8, **dadurch gekennzeichnet, dass** die Probe (12) eine 3-dimensionale Zellkultur- oder Gewebeprobe ist.

10. Ein Verfahren zur Verwendung der Plattenanordnung (1) gemäß einem der Ansprüche 1 bis 9, umfassend die folgenden Schritte:
- Bereitstellen (S10) des ersten Probenhalters (10) mit Küvetten (11) und Befüllen jeder Küvette (11) mit einer Probe (12), die in einem Einbettmedium, einem Zellkulturmedium und/oder einem Hydrogel gelagert ist,
- Bereitstellen (S20) der Probenfixierplatte (20) mit Einsätzen (21) und Einsetzen der Einsätze (21) in die Küvetten (11) des ersten Probenhalters (10), der Proben (12) enthält, wodurch eine Kammer (22) mit einem Volumen gebildet wird, das die Integrität der Struktur der einzelnen Probe (12) gewährleistet,
- Bereitstellen (S30) des Probenhalterrahmens (30) mit einem Aufnahmeelement (32) und Platzieren der in den ersten Probenhalter (10) eingesetzten Probenfixierplatte (20) in dem Aufnahmeelement (32), wodurch die Plattenanordnung (1) zusammengesetzt wird,
- Verbinden (S40) von den Magneten (24) der Probenfixierplatte (20) mit den Magneten (35) des Probenhalterrahmens (30), um die Plattenanordnung (1) stabil zu fixieren,
- Umdrehen (S50) der Plattenanordnung (1) derart, dass die mit Proben (12) befüllten Küvetten (11) des ersten Probenhalterelements (10) nach oben zeigen,
- Beleuchten (S60) der Plattenanordnung (1) von unten mit einem Lichtblattmikroskop, um die Proben (12) zu untersuchen.

11. Ein Verfahren zur Verwendung der Plattenanordnung (1) gemäß einem der Ansprüche 2 und 3 bis 9, sofern auf Anspruch 2 Bezug genommen wird, umfassend die folgenden Schritte:
- Bereitstellen (S100) des ersten Probenhalters (10) mit Küvetten (11), und Befüllen jeder Küvette (11) mit einer Probe (12), die in Einbettmedium, Zellkulturmedium und/oder Hydrogel gelagert ist,
- Bereitstellen (S200) des zweiten Probenhalters (40) mit Küvetten (41), und Einsetzen der Küvetten (41) in die Küvetten (11) des ersten Probenhalters (10), die Proben (12) enthalten, wodurch eine Kammer (42) gebildet wird, deren Volumen die Integrität der Struktur einer einzelnen Probe (12) gewährleistet,
- Bereitstellen (S300) der Probenfixierplatte (20) mit Einsätzen (21), und Einsetzen der Einsätze (21) in die Küvetten (41) des zweiten Probenhalters (40),
- Bereitstellen (S400) des Probenhalterrahmens (30) mit einem Aufnahmeelement (32), und Anordnen des ersten Probenhalters (10), des zweiten Probenhalters (40) und der Probenfixierplatte (20) in dem Aufnahmeelement (32), die nacheinander ausgerichtet sind, wodurch die Plattenanordnung (1) zusammengesetzt wird,
- Verbinden (S500) der Magnete (24) der Probenfixierplatte (20) mit den Magneten (35) des Probenhalterrahmens (30), um die Plattenanordnung (1) stabil zu fixieren,
- Umdrehen (S600) der Plattenanordnung (1) derart, dass die mit Proben (12) befüllten Küvetten (11) des ersten Probenhalterelements (10) nach oben zeigen,
- Beleuchten (S700) der Plattenanordnung (1) von unten mit einem Lichtblattmikroskop, um die Proben (12) zu untersuchen.

12. Das Verfahren nach Anspruch 10 oder Anspruch 11, wobei zuerst jede Küvette (11) des ersten Probenhalters (10) mit einem Einbettungsmedium, einem Zellkulturmedium und/oder einem Hydrogel befüllt wird, und anschließend die Probe (12) eingefüllt wird.

13. Das Verfahren nach einem der Ansprüche 10 bis 12, wobei jede Küvette (11) des ersten Probenhalters (10) manuell oder mit einem Pipettierroboter mit der in einem Einbettmedium, Zellkulturmedium und/oder Hydrogel gelagerten Probe (12) befüllt wird.

14. Das Verfahren nach einem der Ansprüche 10 bis 13, wobei die Probe (12) eine 3-dimensionale Zellkultur oder Gewebeprobe ist.

15. Ein Verfahren zur Verwendung der Plattenanordnung (1) gemäß einem der Ansprüche 1 bis 9, umfassend die folgenden Schritte:
- Bereitstellen (S7) des ersten Probenhalters (10) mit Küvetten (11), und Sterilisieren desselben,
- Befüllen (S8) der Küvetten (11) des sterilisierten ersten Probenhalters (10) mit einem probenbildenden Material (9) und gegebenenfalls mit einem Zellkulturmedium,
- Einbringen (S9) des ersten Probenhalters (10), dessen Küvetten (11) mit dem probenbildenden Material (9) und gegebenenfalls mit dem Zellkulturmedium befüllt sind, in einen Inkubator, bis zum Erhalten einer Probe (12), anschließend
- sequenzielles Durchführen der Schritte S20-S60 gemäß Anspruch 10 oder der Schritte S200-S700 gemäß Anspruch 11.

16. Das Verfahren nach Anspruch 15, wobei das probenbildende Material (9) Einzelzellen in einem Zellkulturmedium oder Hydrogel oder ein oder mehrere kleine Zellaggregate umfasst, und wobei die Probe (12) eine 3-dimensionale Zellkultur lebender Zellen ist.

17. Das Verfahren nach Anspruch 15 oder 16, ferner umfassend das Durchführen der Schritte S7-S9 in einer sterilen Umgebung.

18. Das Verfahren nach einem der Ansprüche 10 bis 17, ferner umfassend das gleichzeitige Verwenden mehrerer Aufnahmeelemente (32) des Probenhalterrahmens (30) zur kontinuierlichen Untersuchung der Proben (12), ohne eine Neukalibrierung des Lichtblattmikroskops.

19. Das Verfahren nach einem der Ansprüche 10 bis 18, wobei die Plattenanordnung eine Plattenanordnung (1) nach einem der Ansprüche 4 bis 9 ist, ferner umfassend den Schritt:
- vor dem Umdrehen der Plattenanordnung (1), Einschieben und stabile Sichern (S41 oder S510) von Befestigungslaschen der Probenfixierplatte (20) und/oder des Gitterklemmelements (50) in die L-förmigen Nuten (37), die an den Seitenwänden (36) des Probenhalterrahmens (30) ausgebildet sind.

20. Das Verfahren nach einem der Ansprüche 10 bis 19, ferner umfassend den Schritt des Herstellens eines beliebigen des ersten Probenhalters (10) und des zweiten Probenhalters (40) aus einer FEP-Folie (fluorierte Ethylen-Propylen-Folie) durch Vakuumformen.

## Revendications

1. Ensemble de plaques (1) destiné à l'examen rapide, automatique et à grande profondeur de pénétration d'échantillons (12) à l'aide d'un microscope à feuille de lumière comportant une unité de balayage,
dans lequel l'ensemble de plaques (1) comprend :
- un premier porte-échantillons (10) configuré pour recevoir une pluralité d'échantillons (12) séparés les uns des autres, ledit premier porte-échantillons (10) étant une feuille transparente et comprenant une pluralité de cuvettes (11), chaque cuvette (11) étant configurée pour recevoir un échantillon (12) simple,
l'ensemble de plaques (1) comprenant en outre
- une plaque de fixation d'échantillons (20) configurée pour positionner les échantillons (12) placés dans les cuvettes (11), la plaque de fixation d'échantillons (20) comprenant une pluralité d'inserts (21), chaque insert individuel (21) pouvant être inséré dans l'une des cuvettes (11) du premier porte-échantillons (10) de telle sorte qu'une chambre (22) soit formée entre le premier porte-échantillons (10) et la plaque de fixation d'échantillons (20) insérée dans chaque cuvette individuelle (11), ladite chambre (22) étant configurée pour garantir l'intégrité de la structure d'un échantillon (12) simple dans les cuvettes individuelles respectives (11) du premier porte-échantillons (10), dans lequel
au moins une fente (23) est formée à côté de chaque insert (21) pour permettre la transmission de la lumière émise par le microscope à feuille de lumière,
ladite plaque de fixation d'échantillons (20) comprenant en outre au moins deux aimants opposés (24),
- un cadre de porte-échantillons (30) configuré pour recevoir le porte-échantillons (10) et la plaque de fixation d'échantillons (20) assemblés entre eux, ledit cadre de porte-échantillons (30) comportant une plaque plane (31), qui comprend au moins un élément de réception (32) configuré pour recevoir le premier porte-échantillons (10) et la plaque de fixation d'échantillons (20) insérés dans celui-ci, dans lequel
le fond de l'élément de réception (32) est réalisé en un matériau transparent,
ledit cadre de porte-échantillons (30) comportant un bord (34) plan s'étendant sur la circonférence de la plaque (31), les dimensions dudit bord (34) étant configurées pour permettre à l'unité de balayage du microscope à feuille de lumière de fonctionner en continu,
le cadre de porte-échantillons (30) comprenant en outre au moins deux aimants (35) opposés situés dans le bord (34), la position de chaque aimant (35) individuel dans le bord (34) coïncidant sensiblement avec la position de l'un des aimants (24) disposés dans la plaque de fixation d'échantillons (20) afin de relier lesdits aimants (24, 35) les uns aux autres et de maintenir ainsi la plaque de fixation d'échantillons (20) stable dans une position insérée.

2. Ensemble de plaques (1) selon la revendication 1, comprenant en outre un deuxième porte-échantillons (40), qui est une feuille de film transparent et qui comprend une pluralité de cuvettes (41), chaque cuvette individuelle (41) pouvant être insérée dans une cuvette respective (11) du premier porte-échantillons (10) de telle sorte qu'une chambre (42) soit formée entre le premier porte-échantillons (10) et le deuxième porte-échantillons (40) dans chaque cuvette individuelle (11), ladite chambre (42) étant configurée pour garantir l'intégrité de la structure dudit échantillon (12) simple dans les cuvettes individuelles (11) respectives du premier porte-échantillons (10), et dans lequel chaque cuvette (41) individuelle du deuxième porte-échantillons (40) est configurée pour recevoir des inserts (21) individuels de ladite plaque de fixation d'échantillons (20).

3. Ensemble de plaques (1) selon la revendication 1 ou 2, **caractérisé en ce que** le cadre de porte-échantillons (30) comprend en outre une paroi latérale (36) saillante s'étendant circonférentiellement, dans lequel chacune d'au moins deux parties opposées de la paroi latérale (36) comprend au moins une rainure en forme de L (37), et la plaque de fixation d'échantillons (20) comprend des languettes de fixation disposées en vis-à-vis et/ou l'ensemble de plaques (1) comprend en outre un élément de serrage en forme de grille (50), dont chacun est adapté pour être inséré dans les rainures (37) et peut être fixé de manière stable afin d'appuyer sur la plaque de fixation d'échantillons (20) dans la position insérée, respectivement.

4. Ensemble de plaques (1) selon l'une quelconque des revendications 1 à 3, **caractérisé en ce que** chaque chambre individuelle (22, 42) formée dans les cuvettes (11) du premier porte-échantillons (10) est configurée pour recevoir conjointement un échantillon (12) et un milieu de montage, un milieu de culture cellulaire et/ou un hydrogel.

5. L'ensemble de plaques (1) selon l'une quelconque des revendications 1 à 4, **caractérisé en ce que** le cadre de porte-échantillons (30) comprend plus d'un, de préférence deux, de plus préférentiellement encore quatre éléments de réception (32), les dimensions desdits éléments de réception (32) correspondant aux dimensions d'une lame standard, chaque élément de réception (32) étant disposé l'un à côté de l'autre et séparé l'un de de l'autre par une paroi de séparation (33).

6. Ensemble de plaques (1) selon l'une quelconque des revendications 1 à 5, **caractérisé en ce que** l'épaisseur du fond des éléments de réception (32) est d'environ 150*µ* m et est constituée d'un matériau choisi parmi le verre, le plastique transparent, la résine transparente ou une feuille de FEP (éthylène propylène fluoré) transparente.

7. Ensemble de plaques (1) selon l'une quelconque des revendications 2 à 6, **caractérisé en ce que** le premier porte-échantillons (10) et le deuxième porte-échantillons (40) sont une feuille transparente choisie parmi au moins l'un des matériaux suivants : feuille d'ECTFE (éthylène-chlorotrifluoroéthylène), feuille de THV (tétrafluoroéthylène-hexafluoropropylène-fluorure de vinylidène), feuille de PFA (perfluoroalkoxy), une feuille de PFA-PG, une feuille de PFA-GK, une feuille de PTFE (polytétrafluoroéthylène, Téflon), en particulier une feuille de FEP, l'épaisseur de la feuille étant comprise entre 25 et 100*µ*m, de préférence entre 5 et 10*µ*m, et le premier porte-échantillons (10) et le deuxième porte-échantillons (40) étant formés par formage sous vide.

8. Ensemble de plaque (1) selon l'une quelconque des revendications 1 à 7, **caractérisé en ce que** le cadre de porte-échantillons (30), à l'exception du fond de l'élément de réception (32), est réalisé en plastique, en résine et/ou en métal.

9. Ensemble de plaques (1) selon l'une quelconque des revendications 1 à 8, **caractérisé en ce que** l'échantillon (12) est une culture cellulaire tridimensionnelle ou un échantillon de tissu.

10. Procédé d'utilisation de l'ensemble de plaques (1) selon l'une quelconque des revendications 1 à 9, comprenant les étapes consistant à :
- fournir (S10) le premier porte-échantillons (10) comportant des cuvettes (11) et remplir chaque cuvette (11) avec un échantillon (12) conservé dans un milieu de montage, un milieu de culture cellulaire et/ou un hydrogel,
- fournir (S20) la plaque de fixation d'échantillons (20) comportant des inserts (21) et insérer lesdits inserts (21) dans les cuvettes (11) du premier porte-échantillons (10) contenant des échantillons (12), formant ainsi une chambre (22), dont le volume garantit l'intégrité de la structure dudit échantillon (12) simple,
- fournir (S30) le cadre de porte-échantillons (30) muni d'un élément de réception (32) et placer la plaque de fixation d'échantillons (20) insérée dans le premier porte-échantillons (10) dans ledit élément de réception (32), et assembler ainsi l'ensemble de plaques (1) ,
- relier (S40) les aimants (24) de la plaque de fixation d'échantillons (20) et les aimants (35) du cadre porte-échantillons (30) afin de fixer de manière stable l'ensemble de plaques (1),
- retourner (S50) l'ensemble de plaques (1) de telle sorte que les cuvettes (11) du premier porte-échantillons (10), remplies d'échantillons (12), soient orientées vers le haut ,
- éclairer (S60) l'ensemble de plaques (1) par le dessous à l'aide d'un microscope à faisceau lumineux en nappe afin d'examiner les échantillons (12) .

11. Procédé d'utilisation de l'ensemble de plaques (1) selon l'une quelconque des revendications 2 et 3 à 9, lorsque celles-ci dépendent de la revendication 2, comprenant les étapes consistant à :
- fournir (S100) le premier porte-échantillons (10) comportant des cuvettes (11) et remplir chaque cuvette (11) d'un échantillon (12) conservé dans un milieu de montage, un milieu de culture cellulaire et/ou un hydrogel,
- fournir (S200) le deuxième porte-échantillons (40) comportant des cuvettes (41) et insérer lesdites cuvettes (41) dans les cuvettes (11) du premier porte-échantillons (10) contenant des échantillons (12), formant ainsi une chambre (42), dont le volume garantit l'intégrité de la structure d'un échantillon (12) simple,
- fournir (S300) la plaque de fixation d'échantillons (20) comportant des inserts (21) et insérer lesdits inserts (21) dans les cuvettes (41) du deuxième porte-échantillons (40) ,
- fournir (S400) le cadre de porte-échantillons (30) comportant un élément de réception (32) et placer le premier porte-échantillons (10), le deuxième porte-échantillons (40) et la plaque de fixation d'échantillons (20) dans ledit élément de réception (32), lesquels sont alignés les uns à la suite des autres, et assembler ainsi l'ensemble de plaques (1),
- relier (S500) les aimants (24) de la plaque de fixation d'échantillons (20) et les aimants (35) du cadre de porte-échantillons (30) afin de fixer de manière stable l'ensemble de plaques (1) ,
- retourner (S600) l'ensemble de plaques (1) de telle sorte que les cuvettes (11) du premier porte-échantillons (10) remplies d'échantillons (12) soient orientées vers le haut ,
- éclairer (S700) l'ensemble de plaques (1) par le dessous avec un microscope à feuille de lumière pour examiner les échantillons (12) .

12. Procédé selon la revendication 10 ou la revendication 11, **caractérisé en ce qu'**il consiste à remplir d'abord chaque cuvette (11) du premier porte-échantillons (10) avec un milieu de fixation, un milieu de culture cellulaire et/ou un hydrogel, puis à la remplir avec l'échantillon (12).

13. Procédé selon l'une quelconque des revendications 10 à 12, **caractérisé en ce que** l'on remplit chaque cuvette (11) du premier porte-échantillons (10) avec l'échantillon (12) conservé dans un milieu de montage, un milieu de culture cellulaire et/ou un hydrogel, manuellement ou à l'aide d'un robot de pipetage.

14. Procédé selon l'une quelconque des revendications 10 à 13, dans lequel l'échantillon (12) est une culture cellulaire tridimensionnelle ou un échantillon de tissu.

15. Procédé d'utilisation de l'ensemble de plaques (1) selon l'une quelconque des revendications 1 à 9, comprenant les étapes consistant à :
- fournir (S7) le premier porte-échantillons (10) comportant des cuvettes (11) et le stériliser,
- remplir (S8) les cuvettes (11) du premier porte-échantillons stérilisé (10) avec un matériau formant l'échantillon (9) et, éventuellement, avec un milieu de culture cellulaire,
- placer (S9) le premier porte-échantillons (10), dont les cuvettes (11) sont remplies de matériau de formation de l'échantillon (9) et, éventuellement de milieu de culture cellulaire, dans un incubateur, jusqu'à l'obtention d'un échantillon (12), puis
- exécuter successivement les étapes S20 à S60 telles que décrites dans la revendication 10 ou les étapes S200 à S700 telles que décrites dans la revendication 11.

16. Procédé selon la revendication 15, dans lequel le matériau de formation de l'échantillon (9) comprend des cellules isolées dans un milieu de culture cellulaire ou un hydrogel, ou un ou plusieurs petits agrégats cellulaires, et dans lequel l'échantillon (12) est une culture cellulaire tridimensionnelle de cellules vivantes.

17. Procédé selon la revendication 15 ou 16, comprenant en outre l'exécution des étapes S7 à S9 dans un environnement stérile.

18. Procédé selon l'une quelconque des revendications 10 à 17, comprenant en outre l'utilisation simultanée de plusieurs éléments récepteurs (32) du cadre de porte-échantillons (30) pour l'examen en continu des échantillons (12), sans recalibrage du microscope à feuille de lumière.

19. Procédé selon l'une quelconque des revendications 10 à 18, dans lequel l'ensemble de plaques est un ensemble de plaques (1) selon l'une quelconque des revendications 4 à 9, comprenant en outre l'étape consistant à
- faire glisser et fixer de manière stable (S41 ou S510) les languettes de fixation de la plaque de fixation d'échantillons (20) et/ou de l'élément de serrage à grille (50) dans les rainures en forme de L (37) formées sur les parois latérales (36) du cadre de porte-échantillons (30), avant de retourner l'ensemble de plaque (1).

20. Procédé selon l'une quelconque des revendications 10 à 19, comprenant en outre l'étape consistant à fabriquer l'un quelconque dudit premier porte-échantillons (10) et dudit deuxième porte-échantillons (40) à partir d'une feuille de FEP (éthylène-propylène fluoré) par formage sous vide.
